# EUROPEAN PATENT SPECIFICATION

(11) **EP 2 576 025 B1**
(45) Date of publication and mention of the grant of the patent: **19.02.2020**
(21) Application number: 11727847.3
(22) Date of filing: 25.05.2011
(51) Int. Cl.: C04B 35/626

(54) **CORDIERITE MEMBRANE ON A CORDIERITE MONOLITH**
CORDIERIT-MEMBRAN AUF EINEM CORDIERIT-MONOLITH
MEMBRANE DE CORDIÉRITE SUR MONOLITHE DE CORDIÉRITE

(30) Priority: 25.05.2010 US 348051 P
(43) Date of publication of application: 10.04.2013
(73) Proprietor: Corning Incorporated, Corning, New York 14831 (US)
(72) Inventor: CLINTON, Joel E, Waverly, New York 14892 (US); DRURY, Kenneth J, Big Flats, New York 14814 (US); GU, Yunfeng, Painted Post, New York 14870 (US); SAUNDERS, Michael E, Corning, New York 14830 (US)
(74) Representative: Elkington and Fife LLP
(86) International application number: PCT/US2011/037996
(87) International publication number: WO 2011/150124

(56) References cited:
- EP-A1- 2 158 956
- EP-A2- 0 884 457
- US-A1- 2007 051 220
- US-A1- 2008 035 557
- US-A1- 2008 299 349
- US-A1- 2008 299 377
- US-A1- 2009 000 475
- US-A1- 2009 110 873
- DONG Y ET AL: "Cost-effective tubular cordierite micro-filtration membranes processed by co-sintering", JOURNAL OF ALLOYS AND COMPOUNDS, ELSEVIER SEQUOIA, LAUSANNE, CH, vol. 477, no. 1-2, 27 May 2009 (2009-05-27), pages L35-L40, XP026086106, ISSN: 0925-8388, DOI: DOI:10.1016/J.JALLCOM.2008.11.061 [retrieved on 2008-11-21] cited in the application

## Description

### FIELD

This disclosure relates to methods of making cordierite monolith substrates having cordierite membranes for the separation of fluids, and the cordierite monolith membranes so made.

### BACKGROUND

Ceramic filters, including filters made from cordierite material, are presently employed for industrial liquid filtration applications and for the removal of particulates from fluid exhaust streams such as power plant stack gases and combustion engine exhausts. Examples include ceramic soot filters used to remove unburned carbonaceous particulates from diesel engine exhaust gases. For example, diesel particulate filters, or DPF's, consist of honeycomb structures formed by arrays of parallel channels bounded and separated by porous channel walls or webs, with a portion of the channels being blocked or plugged at the filter inlet and the remaining channels being plugged at the filter outlet. Exhaust gas to be filtered enters the unplugged inlet channels and passes through the channel walls to exit the filter via the unplugged outlet channels, with the particulates being trapped on or within the inlet channel walls as the gas traverses the filter.

Cordierites have also been used as gasoline particulate filter (GPF), substrates, or as supports for catalytic reactions and fluid separations. Membranes or coatings may be applied to the surfaces of cordierite honeycomb monolith structures. Membranes may be formed of thin layers of a refractory ceramic or glass material, and may be applied via slurry coating to honeycomb substrate channels. These membranes may be porous. These membranes or coatings may be important for the utility of the substrate. For example these membranes or coatings may provide physical or chemical properties that may be important for the intended use of the monolith substrates. Membranes, methods of manufacturing membranes, and ceramic monoliths having membranes, where the membrane monoliths have physical and chemical properties that provide desired characteristics, are provided herein.

US2008/0299377 teaches a method of preparing porous inorganic coatings on porous supports for example for use as membranes for separation applications. US2009/0000475 teaches inorganic membrane structures having a uniform zeolite membrane. A hybrid structure with inner channels having porous walls having optionally porous intermediate layers coating the walls of the channels is proposed by US209/0110873.

### SUMMARY

This disclosure relates to methods of making cordierite monolith substrates having cordierite membranes for the separation of fluids, and the cordierite monolith membranes so made. According to the invention there is provided a cordierite membrane monolith according to claim 1. In applications which require that a polymer membrane on a membrane monolith substrate can hold a vacuum across the monolith structure, a small pore size and a smooth surface, free of cracks, is desirable.

Additional features and advantages will be set forth in the detailed description which follows, and in part will be readily apparent to those skilled in the art from that description or recognized by practicing the embodiments as described herein, including the detailed description which follows, the claims, as well as the appended drawings.

It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification. The drawings illustrate one or more embodiment(s), and together with the description serve to explain principles and operation of the various embodiments.

### BRIEF DESCRIPTION OF THE DRAWINGS

**FIG. 1** is a graph illustrating that a significant fraction of 10 - 400 µm particles, prepared by wet milling and then screened, were present in the dried powder resulting from the wet-milling shown in **FIG. 2****.**
**FIG. 2** is a graph illustrating the change in particle size distribution of cordierite material as a function of ball wet-milling time in a comparative example.
**FIG. 3** is a graph showing the particle size distribution before (circles) and after (triangles) jet-milling, in this comparative example.
**FIG. 4** is a graph showing changes in particle size distribution of cordierite particle with milling time during attrition-milling.
**FIG. 5****.** is a graph showing changes in particle size distribution after 3.5 hours of attrition-milling (circles) and after further treatment by jet milling (squares).
**FIG. 6** is a graph showing the pore size distribution of an unsupported cordierite membrane prepared from the two-step milling process of attrition-milling followed by jet-milling, measured by Hg porosimetry.
**FIG. 7A** and **B** show SEM images (in low resolution (**A**) and high resolution (B)) of surface morphology of an inner channel of a porous monolith cordierite support.
**FIG. 8** is an illustration of an embodiment of an apparatus used to apply an inorganic membrane to the monolith substratedescribed herein.
**FIG. 9A** and **B** are scanning electron micrographs (SEMs) of comparative examples of alumina inorganic membranes applied to cordierite inorganic substrates.
**FIG. 10** shows SEM images of an embodiment of a cordierite membrane made according to Example 1(d) on a monolith cordierite substrate **100**, in a channel surface view (**FIG. 10A**) and a cross-sectional view (**FIG. 10B**).
**FIG. 11** (**A, B** and **C**) shows 3 SEM images of a cross-section of a cordierite membrane coated pre-treated cordierite monolith substrate, illustrating the surface morphology of cordierite membrane where the slip was a 5% slip (**FIG. 11A**), a 10% slip (**FIG. 11B**) and a cross-sectional SEM image (**FIG. 11C**) showing the thickness of the membrane formed from the 10% slip membrane of **FIG. 11B****.**
**FIG. 12** **A** and **B** show two SEM images of an embodiment of a fired cordierite membrane coated on a 5.84cm x 10.16cm (2.3"x4") 1 mm-channel BATCH CODE (A) cordierite support, a channel surface view (**A**) and cross-sectional view (**B**).
**FIG. 13** shows pore size distribution of an embodiment of the cordierite membrane coated on BATCH CODE (A) cordierite support (as shown in **FIG. 12**) measured by mercury porosimetry.
**FIG. 14** show pore size distribution of another embodiment of a cordierite membrane coated on 2.54cm x 5.08cm (1"x2") 1 mm-channel BATCH CODE (A) cordierite support.
**FIG. 15** compares the surface morphology of two embodiments of the cordierite membranes described here in having pore sizes of 0.3-0.4 µm (**A**) and 0.4-0.6 µm (**B**), respectively.
**FIG. 16** **A** and **B** are SEM images of a top-channel surface view of an embodiment of the cordierite membrane coated on the inner channel of a 10 µm-pore DHX cordierite substrate at (A) low magnification, and (B) high magnification.
**FIG. 17** is a graph showing pore size distribution of a cordierite membrane coated on an embodiment of a cordierite substrate with pore size of 10 µm.

### DETAILED DESCRIPTION

A cordierite monolith substrate coated with a cordierite membrane, forming a membrane monolith, is provided. In embodiments, the cordierite membrane of the membrane monolith is free of cracks. The cordierite membrane, applied to the cordierite substrate, has a median pore size that is between 0.1 µm and 1 µm. The cordierite membrane monolith can be used for liquid microfiltration applications, and also can be used as a membrane monolith substrate for subsequent deposition of inorganic or organic membranes. Membrane monolith substrates that have subsequently coated with inorganic or organic membranes may be used for applications such as catalytic reactions or separations such as pervaporation, for example for the separation of gasoline components by octane.

In the following detailed description, reference is made to the accompanying drawings that form a part hereof, and in which are shown by way of illustration several specific embodiments of devices, systems and methods. It is to be understood that other embodiments are contemplated and may be made without departing from the scope of the present disclosure.

All scientific and technical terms used herein have meanings commonly used in the art unless otherwise specified. The definitions provided herein are to facilitate understanding of certain terms used frequently herein and are not meant to limit the scope of the present disclosure.

As used in this specification and the appended claims, the singular forms "a", "an", and "the" encompass embodiments having plural referents, unless the content clearly dictates otherwise. As used in this specification and the appended claims, the term "or" is generally employed in its sense including "and/or" unless the content clearly dictates otherwise.

As used herein, "providing" an article in the context of a method means producing, purchasing, fabricating, supplying or otherwise obtaining the article so that the article may be used in the method.

As used herein, "have", "having", "include", "including", "comprise", "comprising" or the like are used in their open ended sense, and generally mean "including, but not limited to".

### Definitions:

monolith substrate: For the purposes of this disclosure, a monolith substrate is a shaped ceramic suitable for the application of a membrane on a surface of the substrate. The shaped ceramic may be formed, extruded, molded and may be of any shape or size. For example, a monolith substrate may be a filter formed from cordierite. Or, for example, a monolith substrate may be a honeycomb filter.

membrane monolith: For the purposes of this disclosure, a membrane monolith (or a membrane monolith substrate) is a monolith substrate having at least one layer of inorganic membrane applied to a surface of the substrate. There may be more than one layer of inorganic membrane applied to the same surface of the substrate. The membrane may be inorganic or organic or both. For example, a membrane monolith may be a filter in the shape of a honeycomb monolith substrate formed from cordierite, having a cordierite membrane applied to a surface of the honeycomb monolith substrate.

Porous inorganic membrane monoliths have been widely used in industrial liquid filtration separations, and have used for gas separations and catalytic reactions. These membrane monoliths may have a first end, a second end, and a plurality of inner channels having surfaces defined by porous walls and extending through the monolith substrate from the first end to the second end. They may have a membrane applied to a surface of the monolith substrate. For example, the surfaces of the channels of the monolith substrate may be coated with a porous inorganic membrane, forming a membrane monolith.

The specific characteristics of these porous inorganic membrane monoliths are important to optimize the function of the final product. For example, U.S. Patent Application No. 12/626,100 entitled Coated Particulate Filter and Method, discloses a GPF with a thin layer of inorganic membrane for better filtration efficiency with limited backpressure increase. The inorganic membranes described in U.S. Patent Application No. 12/626,100 have median pore sizes of 1 micron or greater.

Membrane monoliths may have one or more inorganic layers deposited thereon. A variety of inorganic membranes including alumina, titania, zirconia, zircon, and zeolite have been studied and applied on alumina, titania and mullite supports.

Among the ceramic materials, cordierite has a low thermal expansion coefficient and requires low firing temperatures. Cordierite has been used and studied in applications such as auto catalytic converters, DPFs, porous ceramic membrane supports, and refractory products. However, there has been limited research on how to make inorganic membranes on cordierite monolith substrates.

Dong et al. prepared two-layer cordierite membrane on tubular cordierite supports (Yingcha Dong, Bin Lin, et al., Cost-effective tubular cordierite microfiltration membranes processed by co-sintering, Journal of Alloys and Compounds, 477 (2009) L35-L40). The co-fired two layers of cordierite membrane were crack-free and the average pore diameters were 1.55 µm and 2.17 µm, and total thickness 60 µm.

For certain applications, 1-2 µm pore size is too large for the proposed use of the substrate. For example, US Patent Application No. 11/890,634 entitled Polymer-Coated Inorganic Membrane for Separating Aromatic and Aliphatic Compounds (publication number 2008/0035557) discloses an inorganic silica monolith having a silica membrane, and also having a polymer-coating on top of the silica membrane where the polymer separates aromatic and aliphatic compounds (in gas phase) commonly found in gasoline.

Applications such as those disclosed in US Patent Application No. 11/890,634, require that a polymer-coated inorganic membrane monolith substrate maintain a vacuum. In order to accomplish this requirement, and not wishing to be limited by theory, it may be required that the median pore size of the inorganic membrane monolith substrate be less than or about equal to the aggregate polymer size of the associated polymer. In addition, it may be required that the inorganic membrane substrate does not have cracks or discontinuities in the surface of the membrane on the monolith which would provide discontinuities in the polymer membrane, allowing leaks which would interfere with a vacuum requirement. Therefore, in order to provide a polymer-coated support which can maintain a vacuum, the characteristics of an inorganic membrane applied to surfaces of an inorganic monolith substrate must be compatible with the application of a polymer layer which can withstand vacuum. That is, for applications such as this, the membrane monolith must have a desirable pore size, and a desirable pore size distribution, and the membrane monolith must not have significant cracks or discontinuities that would allow leaks in a polymer membrane layer applied to the membrane monolith.

Characteristics of the inorganic membrane support may depend on the characteristics of the underlying support and characteristics of the inorganic membrane layer. These characteristics include compatibility between the underlying monolith substrate and the applied inorganic membrane, pore size and roughness of the surfaces of the underlying monolith substrate, and the porosity and roughness of surfaces of the inorganic membrane on the membrane monolith substrate. These characteristics may be affected by the techniques used to deposit the inorganic membrane on the monolith substrate.

In embodiments described herein, the membrane-coated surfaces of the membrane monolith are free of cracks. There are many ways to reduce cracking of ceramic material. For example, to reduce cracking in a ceramic membrane layer applied to a monolith substrate, it may be desirable to match physical properties of the membrane and the monolith substrate. For example, like materials will have like physical characteristics, including thermal expansion characteristics. In embodiments described herein, the monolith substrate material is cordierite, and the membrane material is cordierite. Because these materials are the same, they have the same (or similar) coefficient of thermal expansion (CTE) characteristics. In addition, cordierite membrane requires low firing temperatures, leading to low production costs.

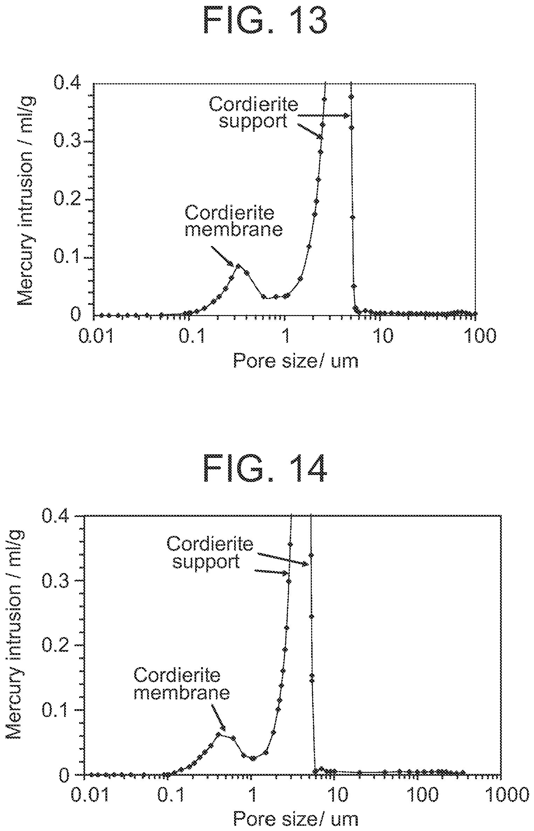

Cordierite has been used and studied in applications such as auto catalytic converters, DPFs, porous ceramic membrane supports, and refractory products. However, there has been limited research on how to make inorganic membranes on cordierite monolith substrates. As the membrane monolith is to be used to support a polymer which must be applied to the membrane monolith in a continuous (leak-free) layer, it may be favorable to develop a cordierite membrane monolith with small pore sizes. The median pore size of the cordierite inorganic membrane substrate may be less than or equal to 0.6 µm, equal to or less than 0.5 µm or between 0.1 and 1 µm. For clarity, note that "size" as used in this context is meant to refer to a pore's cross sectional diameter and, in the case where the pore's cross section is non-circular, is meant to refer to the diameter of a hypothetical circle having the same cross sectional area as that of the non-circular pore. In addition, as shown in FIG. 13 and 14, pore size is measured as a distribution. Median pore size is a measurement of the d₅₀ of a pore size distribution.

Cordierite is magnesium aluminum silicate. The exact composition of the monolith substrate cordierite material may be varied to create cordierite materials having desirable characteristics. For example, the pore size of the cordierite material may be controlled, the porosity of the cordierite may be controlled, and the pore size distribution of the cordierite material may be controlled by varying the particle sizes of the magnesium, aluminum and silica raw materials. In addition, pore formers may be included in the cordierite batches. In embodiments, cordierite monolith substrates may have pore sizes for example of from 1.5 to 15 microns, 1.5 to 12 microns, 1.5 to 10 microns, 1.5 microns to 5 microns, 1.5 to 4.5 microns, 1.5 to 4.3 microns, 1.8 to 15 microns, 1.8 to 12 microns, 1.5 to 10 microns, 1.8 to 8 microns, 1.8 to 6 microns, 1.8 to 5 microns, 1.8 to 4.3 microns or 1.8 to 3.9 microns. In embodiments, cordierite monolith substrates may have porosities of from 35 - 60%, from 35 - 55%, 35 - 50%, 35 - 48%, 35 - 46%, 40 - 60%, 40 - 55%, 40 - 50%, 40 - 48%, 40 - 46%, 43 - 60%, 43-55%, 43-50%, 43-48% or 43-46%, below 60%, below 55%, below 50%, below 48% or below 46%.

Examples of cordierite monolith materials are presented in Table 1.

**Table 1:**

| Batch Code | Median Pore Size (µm) | Porosity (%) |
|---|---|---|
| A | 3.9 - 4.3 | 46 |
| B | 10.0 | 56.7 |
| C | 1.8-2.4 | 43-44 |
| D | 11.4 | 57.6 |

Formulations represented in Table 1 are shown in Table 2.

**Table 2:**

| **Table 2** | **A** | **B** | **C** | **D** |
|---|---|---|---|---|
| **Talc (93-67)** | 40.70% | 42.38% | 40.7% | 42.38% |
| **Hydrous Clay** | Kaolin 14.33% | | Kaolin 14.33% | |
| **Attapulgite clay** | | 5% | | |
| **Alumina** | 27.97% | 30.12% | 27.97% | 30.12% |
| **Boehmite alumina powder** | | 5% | | 5% |
| **Silica** | 17% | 23.5% | 17% | 23.5% |
| **Starch** | Rice Starch 10% | Corn Starch 10% | Crosslinked rice Starch 10% | Walnut Shell Flour (-170 mesh) 30.0% |
| **Methylcellulose** | 4% | 4% | 6% | 6% |
| **Inorganic Binders** | | | | Bentonite 5% |
| **Graphite** | | 20% | | 20% |
| **Y₂O₃ Liquid carrier** | Tall Oil 0.6% | 1% Sodium Stearate 1% | Tall Oil L-5 0.6% | 1% Sodium Stearate 1% |

The formulations shown in Table 2 may also include distilled water as a liquid addition. Methods of making cordierite substrates as represented in Tables 1 and 2 are described in, for example, published patent application 2010/0129600 filed April 14, 2009 and published May 27, 2010 (see, for example, Examples C2 and C3 in Table 2 on page 6, which relate to Batch Codes A and C) and published patent application WO2009/005679 filed 28 June 2007 (see, for example, Example 6 of Table 2, which corresponds to Batch Code D and Batch Code B). Additional information related to methods of making similar cordierite materials and the materials may be found in, for example, US Patent Application No. 12/789,833 and 12/789,945 both filed May 28, 2010.

In embodiments described herein, the composition of the membrane cordierite material may also be varied to create membranes having desirable characteristics. For example, cordierite particles may be used to create slurries that may be applied to surfaces of the membrane monolith. These cordierite particles may be processed to create membrane slurries having particle sizes that are suitable for the desired application.

Cordierite material having a median particle size of 11.6 µm, and having a broad particle size distribution, was obtained commercially from Aveka Inc., Woodbury, MN. However, this material, having a median particle size of 11.6 µm did not provide a final membrane having the desired pore size. The pores of inorganic membrane substrate are formed by random particle packing. Based on particle packing mechanism, the cordierite particles used to form cordierite membranes, according to embodiments described herein, should have a median particle size of 0.8-4 µm or less. For example, cordierite particles having a median particle size of 4 µm produced a membrane having a 1 µm pore size, so cordierite particles having a mean particle size of less than 4 µm may be used to form cordierite membranes, in embodiments. In embodiments, a relatively narrow particle size distribution may for the cordierite particles used to form cordierite membranes may produce more predictable membranes.

Extensive testing was carried out to prepare cordierite raw materials suitable for application to cordierite monolith substrates in embodiments described herein. Wet milling may be achieved by ball-milling or attrition milling. Ball-milling is a conventional grinding process; however, this process is not efficient and may take very long milling times to achieve very fine cordierite material. In addition, using this method, there is a lower limit on the achievable particle size. US patent 4,810,681 disclosed a method of manufacturing dense cordierite, which includes molding and firing of fine cordierite powder with an average particle size of not more than 5 µm. Attrition milling (stirred ball-milling) is more efficient than wet ball-milling. This technique has been described by Rabe et al., Attrition milling of silicon nitride powder under conditions for minimal impurity pickup, Ceramics International, vol. 18, No.3, 1992, pp. 161-166. and by Caerucci et al, Process parameters in attrition milling of cordierite powders, J. Materials Synthesis and Processing, Vol. 6, No. 2, 1998, pp. 115-121. These wet methods led to the formation of agglomerates in the resulting cordierite membrane. Agglomerates may lead to defects in the resulting cordierite membrane.

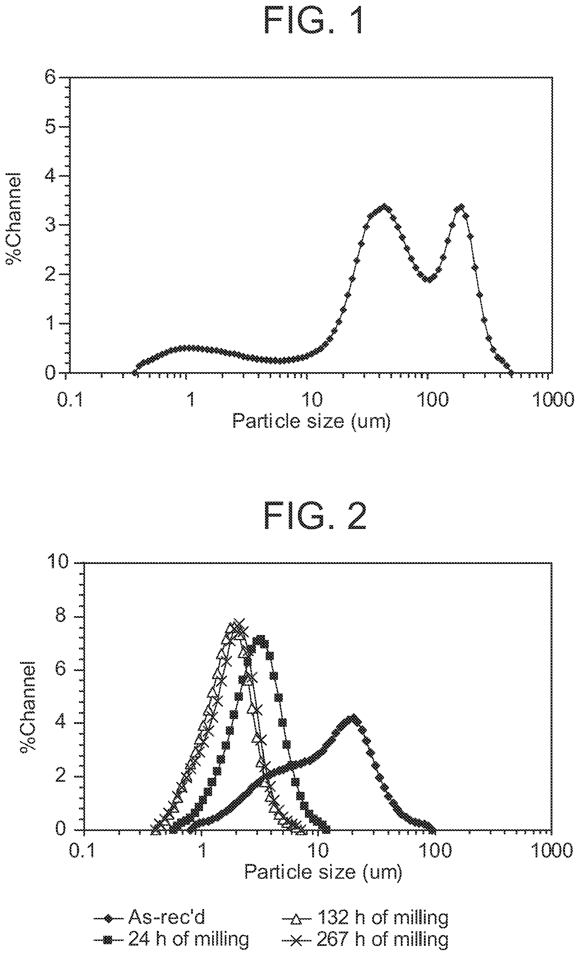

However, it was found that a combination of attrition milling with a subsequent jet milling step resulted in a more efficient process that resulted in a very fine cordierite membrane material (having median particle size between 1 - 4µm or between 1-3 µm, for example) with a narrow particle size distribution suitable for forming a cordierite membrane on a cordierite monolith substrate. These methods are described in Example 1 and FIGs 1-5.

In embodiments described herein, one layer of membrane is provided on the surface of the monolith substrate. In additional embodiments, two or more layers of membrane are provided on the surface of the monolith substrate. To provide one or more layers of membrane on the surface of the monolith substrate, slips or slurries of liquid containing milled fine cordierite material (having median particle size, for example, of between 1 - 4 µm) are applied in one or more coating steps to the surface of the monolith substrate. For example, two layers of membrane may be provided on the surface of the monolith substrate, three layers of membrane may be provided on the surface of the monolith, four layers of membrane may be provided on the surface of the substrate or five layers of membrane may be provided on the surface of the substrate.

In embodiments, for the application of a single membrane layer or multiple membrane layers, each application of membrane may use a slip having a percentage of cordierite material in the slip. In embodiments, cordierite slips may be water-based and may be made by mixing milled cordierite powder with D.I. water, dispersant, polymer binder and anti-foam agent, and mixed by ball-milling for 10-20 h. Polymer binders are known in the art and are, for example, polyethylene glycol (PEG). In embodiments, the slip is an aqueous or water-based suspension. In additional embodiments, organic solvent-based slip can be used for membrane coating as well.

For example, a slip may be made using 1wt% milled cordierite powder. Or, for example, a 2% slip may be used, a 3% slip may be used, a 4% slip may be used, a 5% slip may be used, a 6% slip may be used, 7% slip may be used, 8% slip may be used, 9% slip may be used, 10% slip may be used, an 11% slip may be used, a 12% slip may be used, a 13% slip may be used, a 14% slip may be used, a 15% slip may be used, a 16% slip may be used, a 17% slip may be used, an 18% slip may be used, a 19% slip may be used, a 20% slip may be used, a 21% slip may be used, a 22% slip may be used, a 23% slip may be used, a 24% slip may be used, or a 25% slip may be used, or any range or combination of these slips may be used. Additional ingredients including polymer binders may be incorporated into the slip. For example, in embodiments, 1 to 20 wt % polymer binder may be included in the slip formulation. In additional embodiments, 1- 10wt % polymer binder may be included in the slip material, or 1-5% polymer binder may be included in the slip formulation.

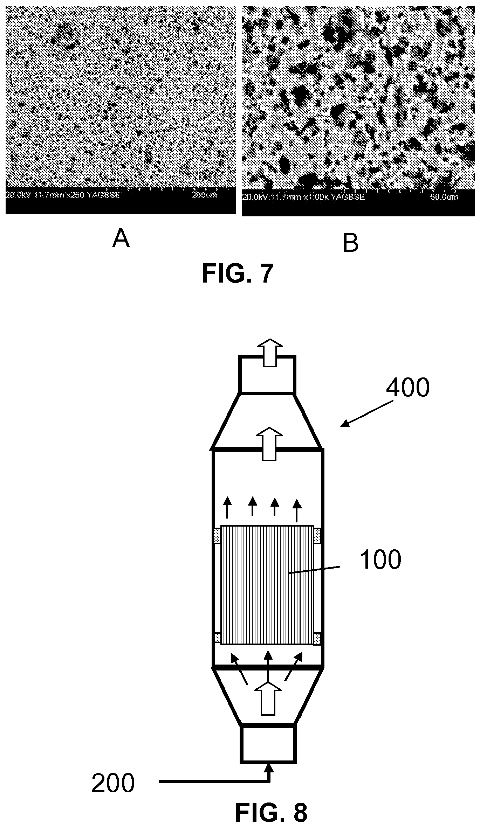

In embodiments, the slip is cast or coated or applied onto a surface of the monolith substrate. In additional embodiments, dip coating or other slip casting techniques may be used. The slip may be applied to a surface or surfaces of the monolith using a flow coater **400** as illustrated in **FIG. 8. FIG. 8** illustrates a flow coater **400**, where a coating solution **200** enters the flow coater **400**, which contains a support **100** having channels under vacuum. The coating solution **200** is pulled through the support **100**, as shown by the arrows in **FIG. 8**, and the membrane is applied to the channels of the support **100**.

In embodiments, multiple layers of membrane may be applied to a substrate, and in embodiments, these multiple layers may have different particle size characteristics. For example, a first layer of membrane having a larger particle size may be applied to a cordierite monolith substrate. Subsequent layers of membrane may be applied having successively smaller particle sizes, resulting in a cordierite membrane monolith having the desired median pore size. The application of multiple layers of cordierite membrane having successively smaller particle sizes may enable the formation of a cordierite membrane monolith from a monolith substrate that has larger pore sizes. For example, the application of a first membrane having an intermediate mean particle size (of, for example, greater than 4 µm) may create an underlayer that supports the application of an additional membrane layer having the desired mean particle size (of, for example, 4 µm or less). In embodiments, the use of multiple layers of cordierite membrane enables the use of cordierite monolith substrates having larger pore sizes as starting materials.

The monolith substrate may be pre-treated prior to the application of the slip. For example, in embodiments, prior to application of slip, monolith support was pretreated. In embodiments, the pretreatment process comprises plugging pores of the support with pore-filling materials. In embodiments, the pore-filling materials are specific organic materials such as protein particles, protein agglomerates in skim milk, starch particles or synthetic polymer particles. These materials may be used to fill pores of the membrane monolith so that the membrane forms a smooth surface. Then, during later firing steps, the pore-fillers burn off. Examples of pore-filling materials are disclosed in patent application US 2008/0299349.

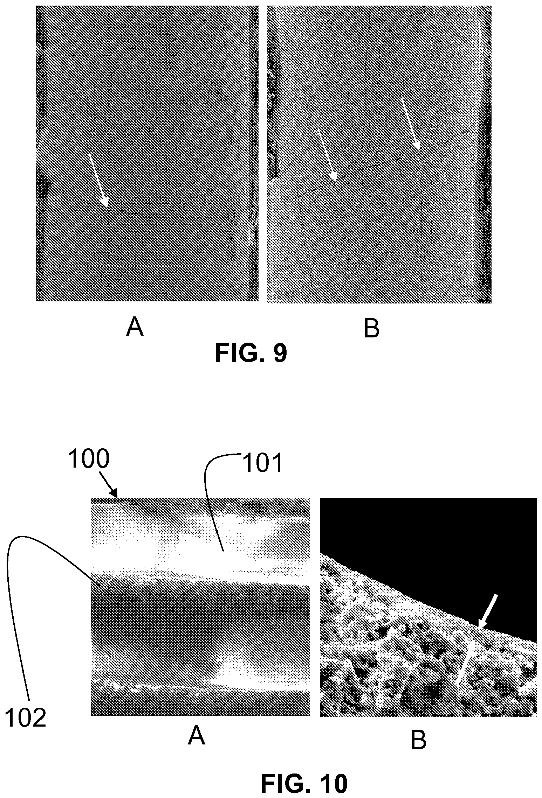

Once the slip is applied to the monolith substrate, the coated monolith may be dried and fired, to create a continuous inorganic membrane layer. In embodiments, the membrane monolith has a smoother surface than the surface of the untreated monolith substrate. Smoothness measured from an example of a cordierite monolith substrate (BATCH CODE (B)) cordierite material, as shown in **FIG. 7**) compared to smoothness of an embodiment of a membrane monolith described herein (BATCH CODE (B)) monolith substrate, pre-treated with skim milk, with a 10wt% slurry of milled cordierite material applied, dried and fired, and shown in **FIG. 10**) is shown in Table 2.

**Table 2:**

| Support | PV (µm) | rms (µm) | Ra (µm) |
|---|---|---|---|
| BATCH CODE (B) | 24.6 | 2.1 | 1.5 |
| BATCH CODE (B) pre-treated 10% slip | 11.9 | 0.98 | 0.77 |

As shown in Table 2, the membrane monolith is significantly smoother as measured by PV (Peak to Valley measurements), rms (root mean square roughness) and Ra (roughness average) calculations.

In embodiments, the PV of the cordierite membrane monolith may be from, for example, 5 - 30 µm, 5 - 25 µm, 5 - 20 µm, 10 - 30 µm, 10 to 25 µm, 10 - 20 µm, 11 - 30 µm, 11 - 25 µm or 11 - 20 µm. In embodiments, the roughness as measured and calculated by rms may be, for example, 0.5 - 3 µm, 0.5 - 2.5 µm, or 0.5 - 2 µm. In embodiments, the roughness as measured and calculated by Ra may be, for example, 0.5 - 2 µm or 0.5 - 1.5 µm.

In embodiments, the thickness of the cordierite membrane applied to a cordierite monolith substrate is limited by the particle size of the cordierite membrane material. The thickness may be measured from a single layer of cordierite membrane or multiple layers of cordierite membranes. For example, a cordierite membrane prepared from cordierite particles having a median diameter of from 1-4 µm may have a lower limit of thickness of between 2 - 5 µm. Cordierite membranes that are too thick may break down or crack. In embodiments, the thickness of the cordierite membrane applied to a cordierite monolith substrate may be, for example, 2 - 25 µm, 2 - 20 µm, 2 -18 µm, 2 -15 µm, 2-12 µm, 2 - 10 µm or 2 - 8 µm, 5 - 25 µm, 5 - 20 µm, 5 -18 µm, 5 -15 µm, 5 - 12 µm, 5 - 10 µm or 5 - 8 µm.

Porosity of the cordierite membrane may be measured from unsupported cordierite membrane preparations. 0.5-0.6 µm membranes, for example, may have a porosity of 55%. 0.3 - 0.4 µm membranes may have a porosity of 58%. In embodiments, the porosity of the cordierite membrane may be, for example, 30 - 65%, 40 - 65%, 50 - 65%, 55 - 65%, 30 - 60%, 40 - 60%, 45 - 60%, 50 - 60%, or 55 - 60%.

In addition, the median pore sizes (as measured by mercury porisometry) of the membrane monoliths, in embodiments described herein, ranged from 0.1 to 1 micron (see FIG. 13 and FIG. 14) while the median pore sizes of uncoated monolith was greater than 1 µm (see Table 1). The coated cordierite membrane substrate has pores fine enough to allow for the subsequent deposition of polymer membranes. The polymer coated membrane substrate hold a vacuum. That is, a polymer membrane applied to the membrane surface of a cordierite membrane substrate forms a seal.

A first aspect of the present disclosure is a set out in independent claim 1. In an embodiment, the cordierite membrane monolith has a median pore size of less than 1 µm. In an embodiment the cordierite membrane monolith has a median pore size of between 0.1 and 1 µm. In an embodiment, the cordierite membrane monolith has a median pore size of between 0.3 and 0.6 µm. In an embodiment, the cordierite membrane monolith has a median pore size of less than 0.6 µm. In an embodiment, of cordierite membrane comprises two layers of cordierite membrane or three layers or cordierite membrane or four layers of cordierite membrane or five layers of cordierite membrane.

An additional embodiment of the present disclosure is the cordierite membrane monolith of first aspect wherein the cordierite monolith substrate has a pore size of 1 to 10 µm, 1.5 to 10 µm,1 to 5 µm, 1 to 4 µm, 1.5 to 5 µm, 1.5 to 4 µm, 1.8 to 2.4 µm, of 1.8 to 4 µm, or of 1.8 to 3.9 µm. An additional embodiment of the present disclosure is the cordierite membrane monolith of first aspect wherein the cordierite monolith substrate has a porosity of below 60%, below 50%, from 40 to 50% or from 35 to 60%. An additional embodiment of the present disclosure is the cordierite membrane monolith of first aspect wherein the cordierite monolith substrate has a porosity of from 40 to 60%, from 40 to 47%, from 43 to 47%, from 43 to 44%, from 43% to 46%. An embodiment of the present disclosure is the cordierite membrane monolith of first aspect wherein the cordierite membrane monolith has a Peak to Valley surface roughness of from 5 to 20 µm, or from 10 to 15 µm. An additional embodiment of the present disclosure is the cordierite membrane monolith of first aspect wherein the cordierite monolith substrate has a surface roughness measured by root mean square roughness (rms) roughness of 1 to 6, from 1 to 5, from 1.5 to 5 or from 1.5 to 2.5 µm. An embodiment of the present disclosure is the cordierite membrane monolith of first aspect wherein the cordierite membrane monolith has a Peak to Valley surface roughness of from 5 to 20 µm, or from 10 to 15 µm. An additional embodiment of the present disclosure is the cordierite membrane monolith of first aspect wherein the cordierite membrane monolith has a Peak to Valley surface roughness of from 10 to 12 µm. Another embodiment of the present disclosure is the cordierite membrane monolith of first aspect wherein the cordierite membrane monolith has an rms surface roughness of from 0.5 to 1 µm or from 0.5 to 2 µm. An additional embodiment of the present disclosure is the cordierite membrane monolith of first aspect wherein the cordierite membrane monolith has an rms surface roughness of less than 1 µm or from 0.75 µm to 1 µm. A thirteenth aspect of the present disclosure is the cordierite membrane monolith of first aspect wherein the cordierite membrane monolith has a roughness average (Ra) surface roughness of from 0.5 to 1 µm or from 0.5 to 1.5 µm. An additional embodiment of the present disclosure is the cordierite membrane monolith of first aspect wherein the cordierite membrane monolith has a roughness average (Ra) surface roughness of less than 1 µm or from 0.75 to 1 µm. In an additional embodiment, the cordierite membrane monolith of the first aspect where a surface of the cordierite membrane on the surface of the cordierite monolith substrate is not cracked is provided.

The present disclosure provides an exemplary method of making a cordierite membrane monolith comprising applying a slurry of cordierite particles having a mean particle size of between 1 and 3 µm or between 1 and 2.5 µm to a cordierite monolith substrate. The present disclosure also provides a method of making a cordierite membrane monolith comprising applying a slurry of cordierite particles having a mean particle size of between 1 and 4 µm or between 1 and 3 µm or between 1 and 2.5 µm to a cordierite monolith substrate wherein the slurry comprises 3% to 25% cordierite particles or from 3% to 20% or from 3% to 15% cordierite particles. In a further exemplary method , the present disclosure provides a method of making a cordierite membrane monolith comprising applying a slurry of cordierite particles having a mean particle size of between 1 and 3 µm or between 1 and 2.5 µm to a cordierite monolith wherein the slurry of cordierite particles is aqueous or non-aqueous. In a further exemplary method , the present disclosure provides a method of making a cordierite membrane monolith comprising applying a slurry of cordierite particles having a mean particle size of between 1 and 3 µm or between 1 and 2.5 µm to a cordierite monolith wherein the cordierite monolith is pretreated with a pore filler before application of the slurry of cordierite particles. In a further exemplary method, the present disclosure provides a method of making a cordierite membrane monolith comprising applying a slurry of cordierite particles having a mean particle size of between 1 and 3 µm or between 1 and 2.5 µm to a cordierite monolith wherein the cordierite particles are prepared by a two-step milling process comprising attrition milling and jet milling. In a further exemplary method, the present disclosure provides a method of making a cordierite membrane monolith comprising applying a slurry of cordierite particles having a mean particle size of between 1 and 3 µm to a cordierite monolith wherein the cordierite particles have a mean particle size of between 1 and 2.5 µm.

Reference will now be made in detail to the present preferred embodiment(s), and examples of which is/are illustrated in the accompanying drawings. Whenever possible, the same reference numerals will be used throughout the drawings to refer to the same or like parts.

### EXAMPLES

### Example 1: Preparation of Cordierite Membrane Material

### Example 1(a): Wet-Milling

In this comparative example of using wet-milling alone, the median particle size d50 of commercially available product (Aveka Inc., Woodbury, MN) was 11.6 µm before milling (in a comparative example) and was reduced to 2.9 µm and 1.8 µm respectively after 24 hours and 132 hours of wet-milling (see **FIG. 2**). However, after another 135 hours of wet-milling, the particle size did not change. The resulting particles were dried and passed through a 400-mesh screen. Agglomerates were formed when the milled cordierite material was dried. **FIG. 1** shows the particle size distribution of wet-milled cordierite particles after drying and passing through a 400 mesh screen. **FIG. 1** illustrates that a significant fraction of 10 - 400 µm particles, prepared by wet milling and then screened, were present in the dried powder.

**FIG. 2** is a graph illustrating the change in particle size distribution of cordierite material as a function of wet-milling (ball milling) time. 907g (2 lbs) of cordierite powder was added in a 6.8L (1.5 gallon) ceramic jar. 4.5L (1.0 gallons) of DI water and 5.4kg (12 lbs) of 9.5mm (3/8") yttria stabilized zirconia media were then added. Total mill time was 267 hours. The cordierite particle size was monitored after 24 hours, 132 hours and 267 hours of milling.

### Example 1(b): Jet Milling

In this comparative example of using jet milling alone, commercially available cordierite material (Aveka Inc., Woodbury, MN) having a mean particle size of 11.6 µm was jet milled. As-received cordierite was continuously fed into a micronizer (commercially available from Sturtavent Inc., Hanover, MA) using a small screw feeder at a rate of 10 grams per minute. Particle size measurement of the as-received cordierite gave the following data: d10 = 1.7µm, d50 = 10.6µm, d90 = 28.6µm. The grind pressure of the micronizer was set to 868 kPa (126 psi) of compressed air. The vortex finder on the micronizer determines the amount of time the material was retained in the grinding chamber. The vortex finder was set to the maximum penetration (75%) to maximize the amount of time material was held in the grinding chamber, and therefore maximize the number of particle collisions. After grinding was achieved, the material was carried in an air stream out of the grinding chamber. Air was exhausted through a cloth filter bag and particulates dropped out into a stainless steel collection pan beneath the cloth filter bag.

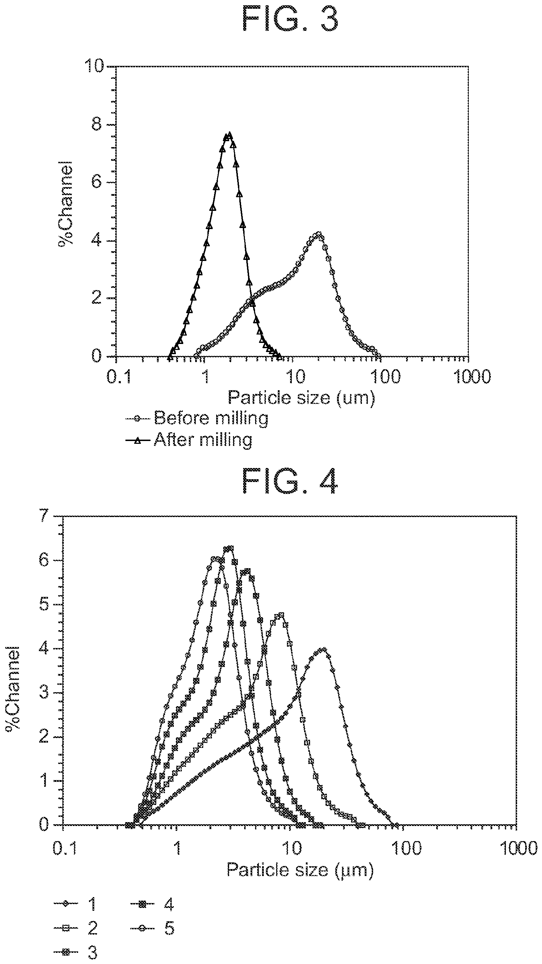

The median particle size (d50) of the comparative cordierite after one pass through the micronizer was measured to be 4.5 µm. This material was then micronized in a second pass with the same grinding conditions. After the second pass the median particle size was measured to be 3.5 µm. The process was then repeated for a third pass with negligible particle size reduction. **FIG. 3** is a graph showing the particle size distribution before (circles) and after (triangles) jet-milling, in this comparative example. The jet-milling process reduced particle size and narrowed particle size distribution.

However, the particle size after wet-milling alone (as in Example 1(a)) or after jet-milling alone (as in Example 1(b)) was not small enough to make a cordierite membrane with a pore size of 1 µm or less.

### Example 1(c): Attrition-Milling

In this comparative example of using attrition milling alone, a circulation attractor was used for attrition milling. 2.7kg (6 lbs) of cordierite powder and 4.1kg (9 lbs) of D.I. water were combined together to form a slurry. The slurry was continuously circulated through the grinding chamber of an attrition mill (Model HML-1.5 VSD with alumina lining, purchased from SPX Process Equipment, Delavan, WI) that contained 3.7kg (8.1 lbs) of yttria stabilized Zirconia balls with O.D. of 0.65mm. The particle size of the cordierite slurry was monitored every half hour during milling. The milling was stopped when the particle size reached the target particle size.

**FIG. 4** is a graph showing changes in particle size distribution of cordierite particle with milling time during attrition-milling. Line 1 shows particle size as received, line 2 shows particle size after 0.5 hours of milling, line 3 shows particle size after 1.5 hours of milling, line 4 shows particle size after 2.5 hours of milling, and line 5 shows particle size after 3.5 hours of milling. After 3.5 h of milling, the d50 value was decreased from 11.6 µm to 1.9 µm, which is similar to the size achieved by 132 h of wet-milling.

### Example 1(d): Attrition-Milling followed by Jet-Milling

In embodiments of the milling process described herein, a two-step milling process including attrition-milling followed by jet-milling was used. Attrition-milling was accomplished according to Example 1(c). The resulting slurry was poured into a large Pyrex baking pan and dried in the oven over the weekend. Dried chunks were passed through a 20 mesh sieve to ensure all chunks were smaller than 20 mesh (850 µm). The dried chunks were then broken up by passing through the micronizer, and jet-milled according to Example 1(b). The -20 mesh chunks were continuously fed into the micronizer using a small screw feeder at a rate of 10 grams per minute. The grind pressure of the micronizer was set to 868kPa (126 psi) of compressed air. The vortex finder on the micronizer determined the amount of time material was retained in the grinding chamber. The vortex finder was set to the maximum penetration (75%) to maximize the amount of time the material was held in the grinding chamber, and therefore maximize the number of particle collisions. After grinding was achieved, the material was carried in an air stream out of the grinding chamber. Air was exhausted through a cloth filter bag and particulates dropped out into a stainless steel collection pan beneath the cloth filter bag.

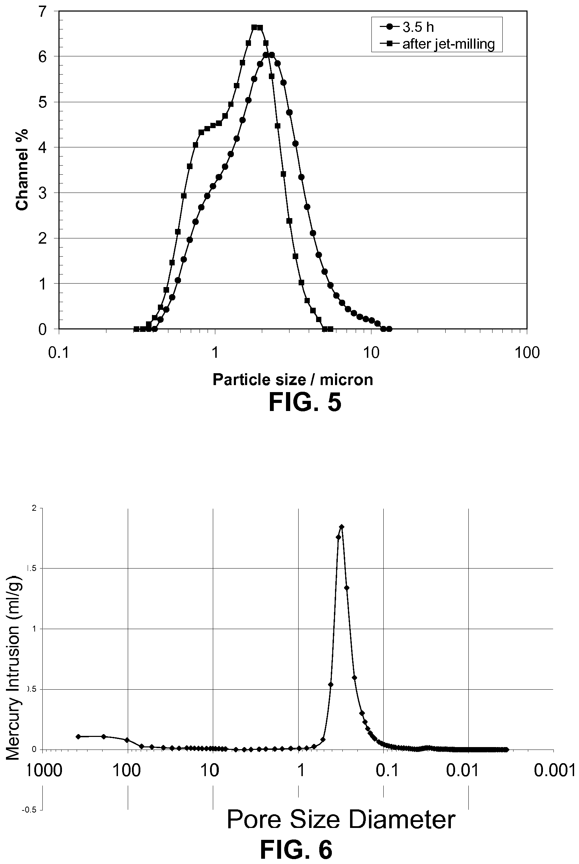

**FIG. 5****.** is a graph showing the d50 of particles after 3.5 hours of attrition-milling (circles) and after further treatment by jet milling (squares). **FIG. 5** illustrates changes in particle size distribution of cordierite material after further treatment by jet milling. It can be seen that some agglomerates were broken down after jet-milling and thus the particle size distribution became further narrower and d50 was reduced to 1.4 µm. By using this two-step milling process of attrition-milling followed by jet-milling, smaller particle sizes were obtained compared to the particle sizes achieved by the use of wet-milling, jet-milling or attrition-milling alone.

### Example 2: Preparation of Unsupported Cordierite Membrane from Milled Cordierite

Cordierite particles were prepared according to Example 1(d). A commercially available ground cordierite material having a median particle size of 11.6 µm was used as a starting material. This starting material was then milled in a two-step milling process using attrition-milling and then jet-milling to form a finely ground cordierite material having a narrow particle size distribution and a median particle size of 1-2 µm.

An unsupported cordierite membrane was made by pouring the resultant cordierite slurry (prepared according to Example 1(d)) into a Petri dish followed by 120°C drying overnight. The dried membrane coating was peeled off the dish and fired at 1150°C for 2 h with a heating rate of 1°C per minute. **FIG. 6** is a graph showing the pore size distribution of an unsupported cordierite membrane prepared from the two-step milling process of attrition-milling followed by jet-milling, measured by Hg porosimetry. It can be seen from **FIG. 6** that the membrane has a narrow pore size distribution with a median pore size of 0.3 µm.

### Example 3: Preparation of Porous Monolith Cordierite Support

This example describes cordierite supports used in an embodiment of this invention. A monolith cordierite support (BATCH CODE (B)) used in this example was made of cordierite with an outer diameter of 2.54cm (1 inch) and a length of 5.08cm (2 inch) comprising 249 rounded channels of an average diameter of 1 mm being uniformly distributed over the cross-sectional area. The BATCH CODE (C) support has a median pore size of 1.8-2.4 µm and porosity of 43-44%, as measured by mercury porosimetry.

**FIG. 7** shows SEM images of surface morphology of an inner channel of a porous monolith cordierite support. It can be seen that the support has a narrow pore size distribution and very limited large surface pores. The surface roughness results indicates mean PV value of 24.6 µm, rms value of 2.1 µm and Ra value of 1.5 µm.

### Example 4: Slip Casting

**FIG. 8** is an illustration of an embodiment of an apparatus **400** used to apply an inorganic membrane to the monolith substrate in embodiments described herein. An extruded monolith cordierite support **100** is used for the deposition of cordierite membrane. Before deposition, the support is flushed with D.I. water or blown with forced air to remove any loose particles or debris. The washed support is dried at a 120°C oven for 5-24 h.

In some cases, the cleaned support was pretreated before membrane coating. The pretreatment process comprises plugging pores of the support with socalled pore-filling materials. Examples of pore-filling materials are disclosed in patent application US 2008/0299349. The pore-filling materials are some specific organic materials such as protein particles, protein agglomerates in skim milk, starch particles or synthetic polymer particles, which can be burnt off during subsequent membrane firing process.

Coating was accomplished on the non-pretreated or pretreated support **100** using a flow coater **400** as illustrated in **FIG. 8. FIG. 8** illustrates a flow coater **400**, where a coating solution **200** enters the flow coater **400**, which contains a support **100** under vacuum. The coating solution **200** is pulled through the support **100**, as shown by the arrows in **FIG. 8**, and the membrane is applied to the channels of the support **100.** Similar flow coating apparatus is described in patent application US 2008/0237919. The coated support was dried at 120 °C for 5 h and then fired at 1100-1200 (for example 1150°C for 2 h) for 0.5-5 h at a heating rate of 0.5-2 °C/min (for example, 1°C/min). The slip-casting process included coating, drying and firing. In embodiments, any of these steps may be repeated to obtain desired coating thickness.

### Example 5: Preparation of Membranes

### Example 5(a): Preparation of Alumina Membranes on Porous Monolith Cordierite Support - Comparative Example

Example 5(a) is a comparative example and describes coating of alumina membranes on embodiments of a porous monolith cordierite support. Two monolith cordierite supports (BATCH CODE B and BATCH CODE D) used in this example were made of cordierite with an outer diameter of 2.54cm (1 inch) and a length of 5.08cm (2 inch) comprising 125 rounded channels of an average diameter of 1.8 mm being uniformly distributed over the cross-sectional area. The BATCH CODE (B) support has a median pore size of 10.0 µm and porosity of 56.7%, as measured by mercury porosimetry. The BATCH CODE (D) support has a median pore size of 11.4 µm and porosity of 57.6%, as measured by mercury porosimetry. The supports were flushed through the channels with D.I. water, and were fully dried at 120 °C oven overnight.

An alumina slip with a solid concentration of 40 wt% and a PEG (polyethylene glycol) concentration of 8 wt.% was prepared. The alumina AA-3 (Sumitomo Chemical Co.) has a narrow particle size distribution with a median particle size of 2.7-3.6 µm. First, 0.36 g of 4,5-Dihydrony-1,3-benzenedissulfonic acid disodium salt (Tiron) was added into a 500 ml plastic jar with 114.7 g D.I. water, to which 120 g alumina powder was added. Upon shaking for around 1 min, the jar was put into an ice bath and ultrasonicated for 30 times with 10 sec ON and 30 sec OFF intervals. Next, the treated slip was mixed with 78.26 g 20 wt% PEG and 2.70 g 1% DC-B anti-foam emulsion solution (Dow-Corning). After ball-milling for 15-20 h, the slip was poured through a fine screen into a flask, followed by degassing with a vacuum pump.

Before membrane coating, the cordierite supports were pretreated with Great Value™ skim milk. The supports were carefully wrapped with Teflon® tape to prevent the pore-filling material (skim milk) from directly contacting the exterior of the supports. Upon soaking for 20 sec, the supports were removed from the skim milk. The excess skim milk was removed from the inner channels by shaking, or N₂ blowing through or spinning. The pretreated supports were dried at ambient conditions for 5 h and then at 60°C over for 10 h.

The alumina membrane was placed inside the channels of BATCH CODE (D) and BATCH CODE (B) supports using the flow-coater as shown in **FIG. 8**. The soaking time was 20 sec. The coated support was spun for 60 sec at a speed of 525 rpm to remove excess alumina slip in the channels, dried at 120°C for 2 h, and fired at 1380°C for 2 h at a heating rate of 1°C/min.

The resulting alumina membrane was characterized by scanning electron microscopy (SEM). **FIG. 9A** and **B** are scanning electron micrographs (SEMs) of comparative examples of alumina inorganic membranes applied to cordierite inorganic substrates. **FIG. 9** (**A** and **B**) are SEM images showing alumina membrane coated on BATCH CODE (B) (**FIG. 9A**) and BATCH CODE (D) (**FIG. 9B**) cordierite supports. **FIG. 9A** and **B** illustrate that an alumina membrane coated on BATCH CODE (B) and BATCH CODE (D) cordierite supports cracked. Cracks are shown by arrows.

### Example 5(b): Preparation of Cordierite Membrane Slip

Cordierite slips were water-based and made by mixing milled cordierite powder with D.I. water, dispersant, polymer binder and anti-foam agent, and ball-milling for 10-20 h. The slips were not limited to water-based suspensions. In embodiments, organic solvent-based slip can be used for membrane coating as well. The solid content in the slip was in the range of 3-25% by weight, while polymer binder concentration was 4% by weight.

A supported cordierite membrane was made by slip casting of cordierite slurry (prepared according to Example 1(d)) on a monolith cordierite (BATCH CODE (C)) with a porosity of 43-44% and median pore size of 2.1 µm. The cordierite slurry containing 5% solid by weight was made by mixing 30 g milled cordierite material with 475 g D.I. water, 0.09 g Tiron and 119 g 20% PEG (polyethylene glycol, MW=20,000 (Fluka)) solution followed by ball-milling for overnight.

### Example 5(b)(2): Additional Example of Preparation of Cordierite Membrane Slip

As an additional example, the procedure of making 300 g batch of the 5% slip containing 5% solids was as follows. First, 0.05 g of Tiron (4,5-Dihydrony-1,3-benzenedissulfonic acid disodium salt, Fluka) was added into a 500 ml plastic jar with 237.5 g D.I. water, to which 15.0 g milled cordierite powder was then added. Upon shaking for around 1 min, the jar was put into an ice bath and ultrasonicated for 30 times with 10 sec ON and 30 sec OFF intervals. Next, the treated slip was mixed with 59.4 g 20 wt% PEG (polyethylene glycol, MW=20,000, Fluka) and 4.3 g 1% DC-B anti-foam emulsion solution (available from Dow-Corning). After ball-milling for 15-20 h, the slip was poured through a fine screen into a flask, followed by degassing with a vacuum pump.

### Example 5(c): Slip-Casting of Cordierite Membrane onto a Monolith Cordierite Substrate (not pre-treated)

Using the apparatus illustrated in **FIG. 8**, a cordierite membrane was applied to the monolith substrate in embodiments described herein. An extruded monolith cordierite support **100** was used for the deposition of cordierite membrane. Before deposition, the support was flushed with D.I. water or blown with forced air to remove any loose particles or debris. The washed support was dried at a 120°C oven for 5-24 h. The coated support was dried at 120°C for 5 h and then fired at 1100-1200° (for example 1150°C for 2 h) for 0.5-5 h at a heating rate of 0.5-2°C/min (for example, 1°C/min). The slip-casting process included coating, drying and firing. In embodiments, any of these steps may be repeated to obtain desired coating thickness.

For example, the supports were flushed through the channels with D.I. water, and were fully dried at 120 °C oven overnight. Three cordierite slips were made comprising a solid content of 3%, 5% and 10%, respectively. The same procedure as listed in Example 5(b) and 5(b)(2) was used to prepare the slips by mixing different amount of cordierite material, D.I water, polymer binder, dispersant and anti-foam agent. After ball-milling for 15-20 h, the slips were screened and vacuumed. The supports were mounted into the flow coater and coated with the slips containing different solid contents, 3%, 5% and 10%. After coating, the coated supports were unloaded and spun at 525 rpm for 1 min. Then they were dried at 120 °C for 2 h and fired at 1150°C for 2 h. For double-coated samples, they were coated again with use of the same slip as for 1^{st} coating before firing.

**FIG. 10** shows SEM images of monolith cordierite membrane substrates **100**, in a channel surface view (**FIG. 10A**) and cross-sectional view (**FIG. 10B**). **FIG. 10A** shows the internal structures of the monolith cordierite substrate **100**, the membrane coating **101** on a channel wall, and the wall **102.** **FIG. 10B** shows a cross-sectional image of the membrane **101** on the substrate. It can be seen that the membrane **101** is uniform in thickness (see white arrows, **FIG. 10B**) with a thickness of approximately 7µm.

**FIG. 10** shows a double-coated cordierite membrane (that is, a cordierite membrane was coated on the cordierite monolith substrate twice) made on non-pretreated cordierite support using 10% slip according to Example 1(d) and Example 5(b)(1) or 5(b)(2). The membrane did not crack. The surface roughness was measured at 4 spots and the mean PV value was 11.9 µm, rms value 0.98 µm and Ra value 0.77 µm. The Ra value was significantly reduced compared to that of the support alone.

### Example 5(d): Slip-casting of Cordierite Membrane on a Pre-treated Monolith Cordierite Substrate

In this example, commercially available skim milk was used as a pretreatment. The skim milk solution was sucked into pores of the ceramic support by dip-coating, slip-casting or other methods. Only the inner surfaces of open channels of the support contacts the skim milk solution during the pretreatment. After the support was contacted with the solution for a period of time, it was taken out of the solution. The pretreated support was dried at room temperature for 24 h, or at a higher temperature but less than 120°C for 5-20 h, or at room temperature for 5-10 h and then at a higher temperature but less than 120°C for 5-10 h.

A coating was then applied according to Example 1(d) and Example 5(b)(1) or 5(b)(2). The coated support was dried at 120°C for 5 h and then fired at 1100-1200° (for example 1150°C for 2 h) for 0.5-5 h at a heating rate of 0.5-2°C/min (for example, 1°C/min). The slip-casting process included coating, drying and firing. In embodiments, any of these steps may be repeated to obtain desired coating thickness. For example, if the slip-casting process is repeated twice, it may be called a double-cast or double-coated cordierite membrane. If the slip-casting process is repeated three times, it may be called a triple-cast or triple-coated cordierite membrane, and so on.

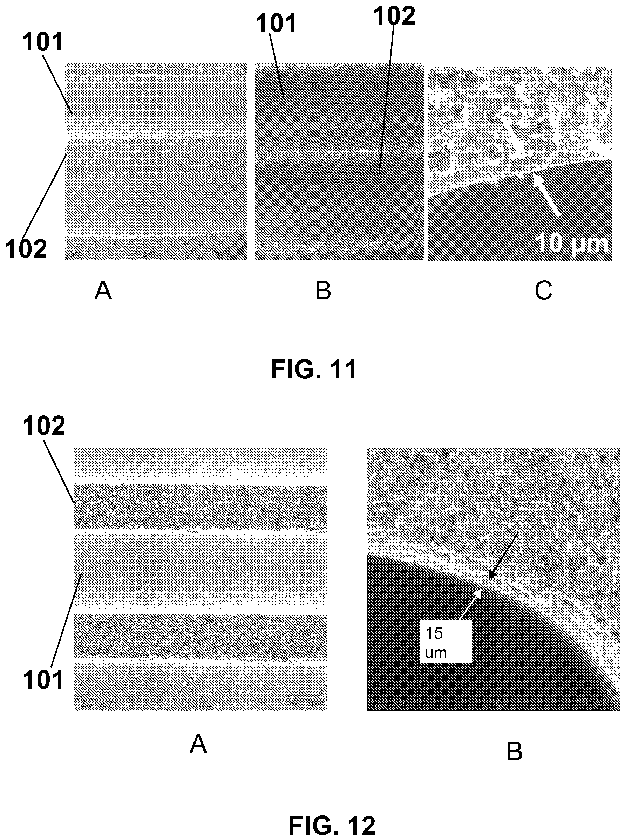

**FIG. 11** shows SEM images of surface morphology of a cordierite membrane monolith made according to Example 1(d) and Example 5(b)(1) or 5(b)(2) on pretreated cordierite substrate **100** (BATCH CODE (B)) using 5% slip (FIG. 11A), and using 10% slip (Fig. 11B and 11C). **FIG. 11A** is an SEM image of a double coated cordierite membrane made on pretreated cordierite support with the use of a 5% slip. **FIG. 11B** is an SEM image of a double-coated cordierite membrane made on pretreated cordierite support with the use of 10% slip. **FIG. 11C** is a cross-sectional view of the membrane made with the use of 10% slip (as shown in **FIG. 11B**, illustrating that the membrane thickness is around 10 µm. **FIG. 11A** shows the internal structures of the monolith cordierite substrate **100** in cross-section, the membrane coating **101** on a channel wall, and the wall **102.** **FIG. 11B** shows an enlarged image of the membrane **101.** It can be seen that the membrane **101** is uniform and crack free.

**FIG. 12** **A** and **B** show SEM images of channel surface view **A** and cross-sectional view **B** of an additional example of a fired cordierite membrane coated on 5.8cm x 10.16 (2.3"x4") 1 mm-channel cordierite support (BATCH CODE A) made according to Example 1(d) and Example 5(b)(1) or 5(b)(2) above. The A support has a porosity of 46% and median pore size of 3.9 um measured by mercury porosimetry. The support was pretreated with skim milk before membrane coating. The cordierite membrane was coated using 10% slip. The membrane was dried and fired at 1150°C. The membrane was 15 µm thick and did not crack.

**FIG. 13** shows pore size distribution of an embodiment of the cordierite membrane coated on A cordierite support (BATCH CODE A) (as shown in **FIG. 12**) measured by mercury porosimetry. Two peaks were observed. The big peak represents pore size of the cordierite support, and the small peak displays the cordierite membrane with pore size of 0.3-0.4 µm.

**FIG. 14** shows pore size distribution of another cordierite membrane coated on 2.54cm x 5.08cm (1"x2") 1 mm-channel BATCH CODE (A) cordierite support (as shown in **FIG. 12**, except that a 15% slip made from cordierite material with a median particle size of 2.2 µm was used), measured by mercury porosimitry. **FIG. 14** shows that the pore size of this cordierite membrane was 0.4-0.6 µm.

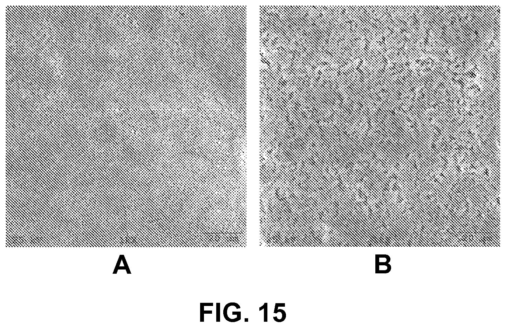

**FIG. 15** compares the surface morphology of two cordierite membranes having pore size of 0.3-0.4 µm (A) and 0.4-0.6 µm (B), respectively. It can be seen that the 0.4-0.6 µm membrane was made of coarser cordierite particle, leading to a larger pore size in the final cordierite membrane monolith support.

### Example 6: Cordierite Membrane on a 10 um pore Cordierite Substrate

As a potential candidate for high permeability membrane substrate, one-layer cordierite coating was made on 2.54cm x 5.08cm (1"x2") cordierite substrate with a median pore size of 10.0 µm and porosity of 56.7%, as measured by mercury porosimetry (Batch Code B). The substrate comprised 125 rounded channels of an average diameter of 2 mm.

The cordierite slip was made comprising a solid content of 15% cordierite with a median particle size of 2.5 µm. The same coater was used to apply the membrane coating on substrate with two coats and one firing. After drying at 120°C for 2 h, the coated parts were fired at 1150°C for 2 h.

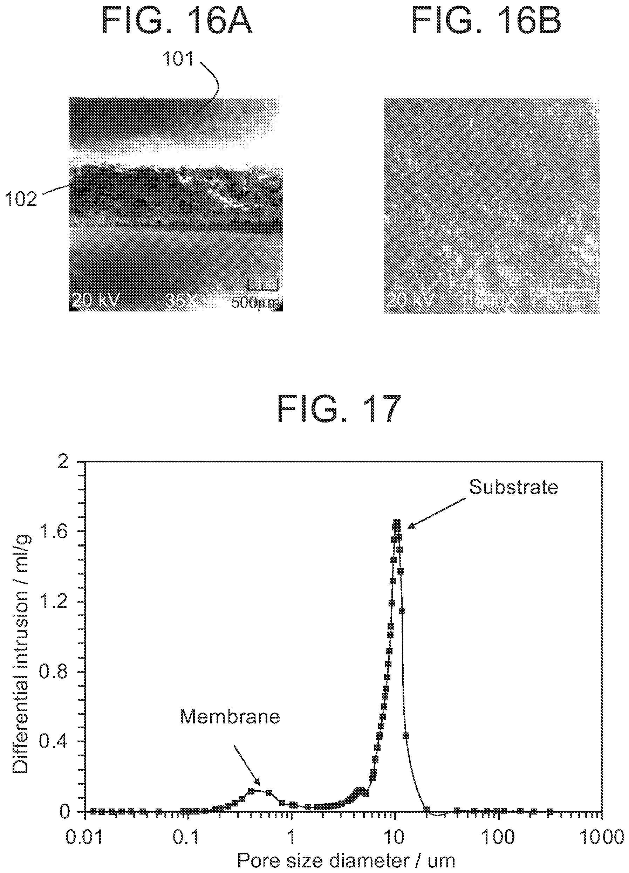

**Fig.16** **A** (low magnification) and **B** (high magnification) shows SEM images of top-channel view of the resulting cordierite coating made on a cordierite substrate with a median pore size of 10.0 µm and porosity of 56.7%. As shown in the figure, a layer of smooth and crack-free cordierite coating was deposited on the substrate. **Fig. 17** shows the pore size distribution of supported cordierite coating measured by Hg porosimetry. The strong peak represents the pore size distribution of the substrate with the pore size of around 10 µm. The weak peak is contributed by cordierite coating that has the median pore size of around 0.5 µm.

Further surface metrology measurement indicated significant surface smoothness improvement after the substrate was coated with the cordierite coating. The roughness Ra value was reduced from 4.1 µm to 1.3 µm, and rms value from 5.422 µm to 1.900 µm, and PV value from 40.477 µm to 11.918 µm.

### Example 7: Polymer Coating on Cordierite Membrane Cordierite Support

The cordierite membrane coated on cordierite support can be also used as a substrate for deposition of polymer membrane for variety of applications. As an example, a cordierite membrane with pore size of 0.3-0.4 µm was first coated on 2.54cm x 5.08cm (1"x2") 1 mm-channel cordierite support (BATCH CODE A). Then, a DENO/D400 emulsion solution containing 0.1% surfactant SDS was coated three times on the resultant cordierite coated support. DENO/D400 is a crosslinked polymer coating, or membrane, comprised of reactants DENO, which is 1,2,7,8-diepoxyoctane (Aldrich Chemical), and D400, which is O,O'-Bis(2-aminopropyl)polypropylene glycol (Huntsman Petrochemical Corp). The ratio of DENO:D400 molecules is 2:1 to achieve optimal crosslinking. After drying and curing, the resulting polymer membrane had weight pick-up of 0.6g and held a vacuum for at least 10 minutes. The resulted polymer membrane had weight pick-up of 0.6 g and held a vacuum. That is, the polymer membrane formed a seal.

It will be apparent to those skilled in the art that various modifications and variations can be made without departing from the scope of the invention.

## Claims

1. A cordierite membrane monolith comprising:
a cordierite monolith substrate;
a cordierite membrane on a surface of the cordierite monolith substrate;
wherein the cordierite membrane comprises a median pore size of 0.1 to 1 µm;
wherein the cordierite membrane monolith further comprises a polymer layer applied to the cordierite membrane on the cordierite monolith substrate; and
wherein the polymer layer holds a vacuum.

2. The cordierite membrane monolith of claim 1 the cordierite membrane comprises a median pore size of less than 0.6 µm.

3. The cordierite membrane monolith of claim 1 wherein the cordierite membrane comprises a single layer of cordierite membrane.

4. The cordierite membrane monolith of claim 1 wherein the cordierite membrane comprises more than one layer of cordierite membrane.

5. The cordierite membrane monolith of claim 4 wherein the cordierite membrane comprises a thickness of from 5 to 25 µm.

6. The cordierite membrane monolith of claim 4 or 5 wherein the cordierite membrane comprises a porosity of from 30 to 60%.

7. The cordierite membrane monolith of claim 1 wherein the cordierite monolith substrate comprises a median pore size of from 1.5 to 5 µm.

8. The cordierite membrane monolith of claim 1 wherein the cordierite monolith substrate comprises a porosity of below 50%.

9. The cordierite membrane monolith of claim 1 wherein the cordierite monolith substrate comprises a porosity of from 35 to 60%.

10. The cordierite membrane monolith of claim 1 wherein the cordierite monolith substrate comprises a surface roughness measured by rms roughness of 1.5 to 5 µm.

11. The cordierite membrane monolith of claim 1 wherein the cordierite membrane monolith comprises a Peak to Valley surface roughness of from 10 to 20 µm.

12. The cordierite membrane monolith of claim 1 wherein the cordierite membrane monolith comprises an rms surface roughness of from 0.5 to 2 µm.

13. The cordierite membrane monolith of claim 1 wherein the cordierite membrane monolith comprises a roughness average (Ra) surface roughness of from 0.5 to 1.5 µm.

## Patentansprüche

1. Ein Cordierit-Membranmonolith, umfassend:
ein Cordierit-Monolithsubstrat,
eine Cordierit-Membran auf einer Oberfläche des Cordierit-Monolithsubstrats,
wobei die Cordierit-Membran eine mittlere Porengröße von 0,1 bis 1 µm aufweist,
wobei der Cordierit-Membranmonolith ferner eine Polymerschicht umfasst, die auf die Cordierit-Membran auf dem Cordierit-Monolithsubstrat aufgebracht ist, und
wobei die Polymerschicht ein Vakuum hält.

2. Cordierit-Membranmonolith nach Anspruch 1, wobei die Cordierit-Membran eine mittlere Porengröße von weniger als 0,6 µm umfasst.

3. Cordierit-Membranmonolith nach Anspruch 1, wobei die Cordierit-Membran eine einzelne Schicht von Cordierit-Membran umfasst.

4. Cordierit-Membranmonolith nach Anspruch 1, wobei die Cordierit-Membran mehr als eine Schicht von Cordierit-Membran umfasst.

5. Cordierit-Membranmonolith nach Anspruch 4, wobei die Cordierit-Membran eine Dicke von 5 bis 25 µm aufweist.

6. Cordierit-Membranmonolith nach Anspruch 4 oder 5, wobei die Cordierit-Membran eine Porosität von 30 bis 60 % aufweist.

7. Cordierit-Membranmonolith nach Anspruch 1, wobei das Cordierit-Monolithsubstrat eine mittlere Porengröße von 1,5 bis 5 µm aufweist.

8. Cordierit-Membranmonolith nach Anspruch 1, wobei das Cordierit-Monolithsubstrat eine Porosität von weniger als 50 % aufweist.

9. Cordierit-Membranmonolith nach Anspruch 1, wobei das Cordierit-Monolithsubstrat eine Porosität von 35 bis 60 % aufweist.

10. Cordierit-Membranmonolith nach Anspruch 1, wobei das Cordierit-Monolithsubstrat eine Oberflächenrauheit, gemessen als quadratische Rauheit, von 1,5 bis 5 µm aufweist.

11. Cordierit-Membranmonolith nach Anspruch 1, wobei der Cordierit-Membranmonolith eine Rautiefen-Oberflächenrauheit von 10 bis 20 µm aufweist.

12. Cordierit-Membranmonolith nach Anspruch 1, wobei der Cordierit-Membranmonolith eine quadratische Oberflächenrauheit von 0,5 bis 2 µm aufweist.

13. Cordierit-Membranmonolith nach Anspruch 1, wobei der Cordierit-Membranmonolith eine durchschnittliche Oberflächenrauheit (Ra) von 0,5 bis 1,5 µm aufweist.

## Revendications

1. Monolithe à membrane de cordiérite comprenant :
un substrat monolithique de cordiérite ;
une membrane de cordiérite sur une surface du substrat monolithique de cordiérite ;
ladite membrane de cordiérite présentant une taille moyenne de pore de 0,1 à 1 µm ;
ledit monolithe à membrane de cordiérite comprenant en outre une couche polymère appliquée sur la membrane de cordiérite sur le substrat monolithique de cordiérite ; et
ladite couche de polymère retenant un vide.

2. Monolithe à membrane de cordiérite selon la revendication 1, ladite membrane de cordiérite présentant une taille moyenne de pore inférieure à 0,6 µm.

3. Monolithe à membrane de cordiérite selon la revendication 1, ladite membrane de cordiérite comprenant une seule couche de membrane de cordiérite.

4. Monolithe à membrane de cordiérite selon la revendication 1, ladite membrane de cordiérite comprenant plus d'une couche de membrane de cordiérite.

5. Monolithe à membrane de cordiérite selon la revendication 4, ladite membrane de cordiérite présentant une épaisseur allant de 5 à 25 µm.

6. Monolithe à membrane de cordiérite selon la revendication 4 ou 5, ladite membrane de cordiérite présentant une porosité allant de 30 à 60 %.

7. Monolithe à membrane de cordiérite selon la revendication 1, ledit substrat monolithique de cordiérite présentant une taille moyenne de pore allant de 1,5 à 5 µm.

8. Monolithe à membrane de cordiérite selon la revendication 1, ledit substrat monolithique de cordiérite présentant une porosité inférieure à 50 %.

9. Monolithe à membrane de cordiérite selon la revendication 1, ledit substrat monolithique de cordiérite présentant une porosité allant de 35 à 60 %.

10. Monolithe à membrane de cordiérite selon la revendication 1, ledit substrat monolithique de cordiérite présentant une rugosité de surface mesurée par rugosité rms de 1,5 à 5 µm.

11. Monolithe à membrane de cordiérite selon la revendication 1, ledit monolithe à membrane de cordiérite présentant une rugosité de surface de crête à creux allant de 10 à 20 µm.

12. Monolithe à membrane de cordiérite selon la revendication 1, ledit monolithe à membrane de cordiérite présentant une rugosité de surface rms allant de 0,5 à 2 µm.

13. Monolithe à membrane de cordiérite selon la revendication 1, ledit monolithe à membrane de cordiérite présentant une rugosité de surface exprimée en rugosité moyenne (Ra) allant de 0,5 à 1,5 µm.
